# EUROPÄISCHE PATENTSCHRIFT

(11) **EP 2 628 584 B1**
(45) Veröffentlichungstag und Bekanntmachung des Hinweises auf die Patenterteilung: **25.06.2014**
(21) Anmeldenummer: 12196354.0
(22) Anmeldetag: 10.12.2012
(51) Int. Cl.: B29C 49/42, B65G 29/00

(54) **Transporteinrichtung und Transportverfahren für Behälterbehandlungsanlage sowie Blasmaschine**
Transporting apparatus and transporting method for container handling installation, and blowing machine
Installation de transport et procédé de transport pour installation de traitement de récipients et souffleuse

(30) Priorität: 16.02.2012 DE 102012101238
(43) Veröffentlichungstag der Anmeldung: 21.08.2013
(73) Patentinhaber: Krones AG, 93073 Neutraubling (DE)
(72) Erfinder: Forsthövel, Jochen, 93073 Neutraubling (DE); Gmeiner, Franz, 93073 Neutraubling (DE)
(74) Vertreter: Schuhbießer, Irmgard Gertrud

(56) Entgegenhaltungen:
- EP-A1- 2 412 651
- EP-A1- 2 460 747
- WO-A2-2006/097796
- DE-A1- 10 325 693
- DE-A1- 19 906 309
- DE-U1-202004 021 491
- FR-A1- 2 917 392

## Beschreibung

Die Erfindung bezieht sich auf eine Transporteinrichtung und ein Transportverfahren für eine Behälterbehandlungsanlage sowie eine Blasmaschine.

Eine Behälterbehandlungsanlage, die beispielsweise eine Blasmaschine, Reinigungsmaschine, Füllmaschine, Etikettiermaschine, usw. sein kann, findet insbesondere in der Getränkeindustrie zur Herstellung von Behältern Verwendung. Behälter sind insbesondere Flaschen, die aus Vorformlingen (Preform) aus Kunststoff hergestellt werden. Unter Behältnissen werden Vorformlinge sowie die aus Vorformlingen hergestellten Flaschen bzw. Behälter verstanden. Die Behältnisse werden zu der Behälterbehandlungsanlage und weg von der Behälterbehandlungsanlage mit einer Transporteinrichtung transportiert.

DE 103 25 693 A1 offenbart eine Transfervorrichtung, welche Gegenstände von einer Aufgabestation zu den Aufnahmeplätzen eines umlaufenden Förderers und von diesen zu einer Abgabestation transportiert.

DE 199 06 309 A1 zeigt ein Verfahren und eine Vorrichtung zur Blasformung von Behältern aus einem thermoplastischen Material.

Die nachveröffentlichte EP 2 460 747 A1 zeigt eine Vorrichtung und ein Verfahren zum Zuführen von Flaschen zu einer Füllstation, bei welchen eine Transporteinrichtung zum Zuführen von Flaschen in einer Zuführrichtung angeordnet ist und ein um eine Achse drehbares Übergaberad schräg zu der Zuführrichtung angeordnet ist.

Derzeit sind im Stand der Technik Blasmaschinen bekannt, bei welchen mehrere Blasstationen zusammen im Wesentlichen einen Ring, das Blasrad, bilden. In jeder Blasstation kann ein Vorformling in einen Behälter zur Aufnahme beispielsweise eines Getränks umgeformt werden. Die Blasstationen rotieren wie ein Karussell um einen Punkt, so dass die Blasstationen jeweils an einem festen Übergabepunkt nacheinander einen fertig geformten Behälter an eine Transporteinrichtung abgeben können und direkt anschließend wieder einen neuen zu behandelnden Vorformling von der Transporteinrichtung aufnehmen können. Durch die Rotation wirken auf die Blasstationen sowie auf ihre Eingabe- und Ausgabeteile erhebliche Massekräfte. Dies erfordert eine spezielle Konstruktion, welche die wirkenden Massekräfte problemlos aufnehmen kann. Eine solche Konstruktion ist aufwendig und damit teuer. Zudem wird für die Rotation der Blasstationen viel Energie benötigt. Dies hat vergleichsweise hohe Betriebskosten zur Folge.

WO 2010/112307 A1 zeigt eine stationäre Blasmaschine mit mehreren Blasformen, die auf einem stationären Blasrad angeordnet sind. Bei einer solchen Blasmaschine kann auf eine Rotation der Blasformen verzichtet werden.

Bei bisher angedachten Konzepten für die Zuführung von Vorformlingen zu der stationären Blasmaschine und dem Abtransport von fertiggestellten Behältern weg von der Blasmaschine sollten bevorzugt gleiche Transferzeiten realisiert werden. Bei einer stationären Blasmaschine war die dafür erforderliche Mechanik jedoch bisher recht kompliziert. Aufgrund dessen sind die Herstellungskosten für die Transporteinrichtung zum Transport von Vorformlingen zu der Blasmaschine und von Behältern weg von der Blasmaschine derzeit noch höher als bei einer Blasmaschine mit rotierenden Blasstationen.

Es ist daher Aufgabe der vorliegenden Erfindung, eine verbesserte Transporteinrichtung und ein verbessertes Transportverfahren für eine Behälterbehandlungsanlage sowie eine verbesserte Blasmaschine zu schaffen, bei welchen die Zuführung von Vorformlingen zu der vorzugsweise stationären Behälterbehandlungsanlage und der Abtransport von fertiggestellten Behältern weg von der Behälterbehandlungsanlage gleiche Transferzeiten realisiert und zudem die Herstellungskosten und die Betriebskosten der Behälterbehandlungsanlage vermindert sind.

Diese Aufgabe wird durch eine Transporteinrichtung für eine Behälterbehandlungsanlage nach Patentanspruch 1 gelöst.

Mit der beschriebenen Transporteinrichtung kann aufgrund der Anordnung des Transportsterns schräg zur Behandlungsstation realisiert werden, dass eine gleiche Transferzeit zu den einzelnen Behandlungsstationen gewährleistet wird. Die gleiche Transferzeit kann demzufolge mit sehr einfacher Mechanik realisiert werden, auch wenn die Behälterbehandlungsanlage stationär angeordnet ist oder mit geringerer Geschwindigkeit gedreht wird als derzeit bekannt.

Eine derartige Transporteinrichtung und die mit Behältnissen beschickte Behälterbehandlungsanlage haben eine relativ kleine Bauform. Dadurch reduzieren sich auch die in der Behälterbehandlungsanlage auftretenden Fliehkräfte. Auch der Platzbedarf der gesamten Blasmaschine wird aufgrund der vergleichsweise kleinen Bauform reduziert.

Mit der beschriebenen Transporteinrichtung kann erzielt werden, dass nur die Behältnisse relativ zur Behälterbehandlungsanlage zu transportieren sind. Damit ist es nicht mehr erforderlich, die Behandlungsstationen der Behälterbehandlungsanlage zu bewegen.

Durch die beschriebene Konstruktion der Transporteinrichtung können sowohl die Herstellungskosten als auch die Betriebskosten der Behälterbehandlungsanlage gegenüber dem Stand der Technik deutlich gesenkt werden.

Mit der beschriebenen Transporteinrichtung kann aufgrund der Anordnung des ersten und zweiten Transportsterns schräg zur Behandlungsstation realisiert werden, dass sowohl die Zuführung der Behältnisse zu dem ersten Transportstern als auch der Abtransport von Behältnissen weg von dem zweiten Transportstern von einem Punkt ausgeht, der eine gleiche Transferzeit zu den einzelnen Behandlungsstationen gewährleistet. Auch eine derartige Transporteinrichtung und die damit mit Behältnissen beschickte Behälterbehandlungsanlage haben eine relativ kleine Bauform sowie die zuvor genannten Vorteile.

Vorteilhafte weitere Ausgestaltungen der Transporteinrichtung sind in den abhängigen Patentansprüchen angegeben.

Vorzugsweise sind der erste und zweite Transportstern und die Behandlungsstation relativ zueinander bewegbar.

Es ist möglich, dass der erste Transportstern um eine erste Drehachse drehbar ist und der zweite Transportstern um eine zweite Drehachse drehbar ist, und dass der erste und zweite Transportstern zusammen um eine dritte Drehachse drehbar sind.

Bevorzugt sind die erste und zweite Drehachse jeweils schräg zur dritten Drehachse angeordnet, und/oder die erste Drehachse ist parallel zur zweiten Drehachse angeordnet.

Es ist von Vorteil, dass der erste Transportstern derart benachbart zu dem zweiten Transportstern angeordnet ist, dass die Behandlungsstation außen an einem Ring anordenbar ist, innerhalb welchem der erste und zweite Transportstern angeordnet sind.

Vorteilhafter Weise ist der erste Transportstern derart angeordnet, dass er die Behältnisse zum Transport an die Behandlungsstation an einem Punkt in der Mitte des Rings übernehmen kann, und der zweite Transportstern ist derart angeordnet, dass er die Behältnisse nach seinem Transport an einem Punkt in der Mitte des Rings abgeben kann. Durch diese Konstruktion der Transporteinrichtung gehen die Zuführung der Vorformlinge zu dem ersten Transportstern und der Behälterabtransport von dem zweiten Transportstern jeweils von einem Punkt aus, der auf der Achse durch den Mittelpunkt des Rings liegt, den die Blasstationen miteinander bilden. Dies ist der Idealfall, um gleiche Transferzeiten zu den einzelnen Blasstationen zu gewährleisten.

Die Transporteinrichtung kann zudem ein rohrförmiges Element zur Zuführung von Vorformlingen zu einer Behandlungsstation der Behälterbehandlungsanlage umfassen, wobei ein schräg zu der Behandlungsstation angeordneter Transportstern des mindestens einen Transportsterns zum Transport der Behältnisse weg von der Behandlungsstation der Behälterbehandlungsanlage dient.

In einer bevorzugten Ausgestaltung hat die Behälterbehandlungsanlage eine Blasmaschine oder eine Reinigungsmaschine oder eine Füllmaschine oder eine Etikettiermaschine.

Die zuvor beschriebene Transporteinrichtung kann Teil einer Blasmaschine zum Herstellen von Behältern, zur Aufnahme eines Produkts, aus Vorformlingen sein: Die Blasmaschine hat eine Vielzahl von Blasstationen, die zusammen einen Ring bilden, zum Formen eines Behälters aus einem Vorformling. Die Transporteinrichtung dient zum Transport von jeweils einem Vorformling zu einer der Vielzahl von Blasstationen und zum Transport von jeweils einem Behälter weg von einer der Vielzahl von Blasstationen.

Es ist vorteilhaft, wenn die Vielzahl von Blasstationen gegenüber dem ersten und zweiten Transportstern der Transporteinrichtung feststehend angeordnet ist.

Die zuvor genannte Aufgabe wird ferner durch ein Transportverfahren für eine Behälterbehandlungsanlage nach Patentanspruch 11 gelöst.

Das Transportverfahren erzielt die gleichen Vorteile, wie sie zuvor in Bezug auf die Transporteinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der im Folgenden beschriebenen Ausführungsbeispiele der Erfindung.

Nachfolgend ist die Erfindung unter Bezugnahme auf die beiliegenden Zeichnungen und anhand von Ausführungsbeispielen näher beschrieben. Es zeigen:
Fig. 1 eine schematische Draufsicht auf eine Behälterbehandlungsanlage mit einer Transporteinrichtung gemäß einem ersten Ausführungsbeispiel;
Fig. 2 eine schematische Seitenansicht der Behälterbehandlungsanlage mit der Transporteinrichtung gemäß dem ersten Ausführungsbeispiel;
Fig. 3 eine schematische Seitenansicht einer Behälterbehandlungsanlage mit einer Transporteinrichtung gemäß einer ersten Modifikation des ersten Ausführungsbeispiels;
Fig. 4 eine schematische Draufsicht auf eine Behälterbehandlungsanlage mit einer Transporteinrichtung gemäß einer zweiten Modifikation des ersten Ausführungsbeispiels;
Fig. 5 eine schematische Draufsicht auf eine Behälterbehandlungsanlage mit einer Transporteinrichtung gemäß einer dritten Modifikation des ersten Ausführungsbeispiels;
Fig. 6 eine schematische Draufsicht auf eine Behälterbehandlungsanlage mit einer Transporteinrichtung gemäß einem zweiten Ausführungsbeispiel;
Fig. 7 eine schematische Draufsicht auf eine Behälterbehandlungsanlage mit einer Transporteinrichtung gemäß einem dritten Ausführungsbeispiel; und
Fig. 8 eine schematische Seitenansicht der Behälterbehandlungsanlage mit der Transporteinrichtung gemäß dem dritten Ausführungsbeispiel.

In den Figuren sind gleiche oder funktionsgleiche Elemente, sofern nichts anderes angegeben ist, mit denselben Bezugszeichen versehen.

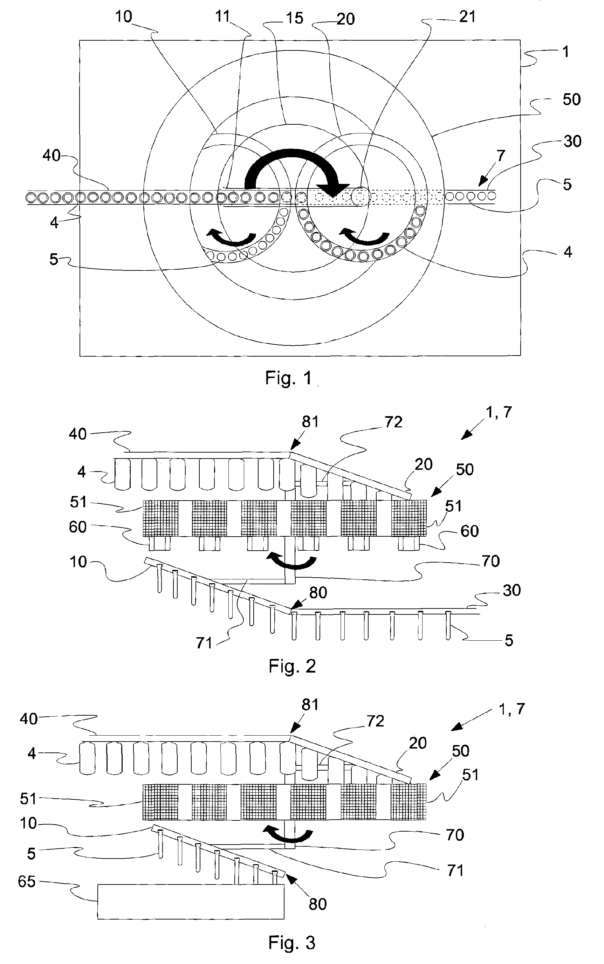

Fig. 1 zeigt eine Behälterbehandlungsanlage 1 zur Behandlung von Behältern 4 und/oder Vorformlingen 5. In der Behälterbehandlungsanlage 1 in Fig. 1 sind die Behälter 4 aus den Vorformlingen 5 herstellbar. Die Vorformlinge 5 sind aus Kunststoff, wie Polyethylenterephthalat (PET), Polypropylen (PP) usw. gefertigt und sind ebenfalls Behälter, wenn auch noch unfertige bzw. von der Behälterbehandlungsanlage 1 unbehandelte Behälter. Die fertiggestellten Behälter 4 können beispielsweise Flaschen sein, in die ein Produkt eingefüllt werden kann. Das Produkt kann insbesondere ein Getränk, ein Reinigungsmittel usw. sein. In Fig. 1 sind die Behälter 4 jeweils als zwei konzentrische Kreise und die Vorformlinge 5 jeweils als ein Kreis dargestellt, wobei der Übersichtlichkeit halber nur einige der Behälter 4 und Vorformlinge 5 in Fig. 1 mit einem Bezugszeichen versehen sind.

In Fig. 1 umfasst die Behälterbehandlungsanlage 1 eine Transporteinrichtung 7 und eine Blasmaschine 50. Die Transporteinrichtung 7 hat einen ersten Transportstern 10, einen zweiten Transportstern 20, eine erste Transportschiene 30, und eine zweite Transportschiene 40. Die Blasmaschine 50 ist in Fig. 1 nur sehr schematisch dargestellt. In der Blasmaschine 50 können die Vorformlinge 5 durch Einblasen eines gasförmigen Mediums in die gewünschte Form des Behälters 4 geblasen werden .Die Blasmaschine 50 kann insbesondere eine Streckblasmaschine sein.

Der erste Transportstern 10 dreht sich in der Richtung der kleinen schwarzen Blockdrehpfeile in Fig. 1 um eine erste Drehachse 11, welche im Zentrum des ersten Transportsterns 10 angeordnet ist. Der erste Transportstern 10 übernimmt die von der ersten Transportschiene 30 zugeführten und transportierten Vorformlinge 5, und führt sie der Blasmaschine 50 zu.

Der zweite Transportstern 20 dreht sich ebenfalls in der von den kleinen schwarzen Blockdrehpfeilen in Fig. 1 angegebenen Drehrichtung um eine zweite Drehachse 21, welche im Zentrum des zweiten Transportsterns 20 angeordnet ist. Der zweite Transportstern 20 übernimmt die von der Blasmaschine 50 fertig geblasenen Behälter 4 und übergibt sie an die zweite Transportschiene 40. Die zweite Transportschiene 40 führt beispielsweise zu einer nicht dargestellten Reinigungsmaschine, einer nicht dargestellten Füllmaschine, usw.

Der erste Transportstern 10 dreht sich zusammen mit dem zweiten Transportstern 20 in der mit dem dicken schwarzen Blockdrehpfeil in Fig. 1 dargestellten Drehrichtung, wie noch genauer in Fig. 2 dargestellt. Dadurch bewegen sich der Mittelpunkt des ersten Transportsterns 10, welcher Mittelpunkt in der ersten Drehachse 11 liegt, und der Mittelpunkt des zweiten Transportsterns 20, welcher Mittelpunkt in der zweiten Drehachse 21 liegt, jeweils auf einer Kreisbahn 15 innerhalb des von der Blasmaschine 50 gebildeten Rings. Dieser Ring wird auch Blasrad genannt. Die Kreisbahn 15 ist konzentrisch zu der Kreisbahn des Blasrades der Blasmaschine 50, hat jedoch einen geringeren Durchmesser als die Kreisbahn des Blasrades, bevorzugt nur den halben Durchmesser der Kreisbahn des Blasrades der Blasmaschine 50, wie in Fig. 1 gezeigt.

Fig. 2 veranschaulicht die Behälterbehandlungsanlage 1 von Fig. 1 in der Seitenansicht genauer. Wie aus Fig. 2 ersichtlich, ist der erste Transportstern 10 schräg zu der ersten Transportschiene 30 und auch schräg zu der Blasmaschine 50 angeordnet. Die Blasmaschine 50 hat eine Vielzahl von Blasstationen 51, welche jeweils einen Vorformling 5 aufnehmen können, um ihn durch Einblasen eines gasförmigen Mediums in den Behälter 4 umzuformen. Die Blasstationen 51 sind nachfolgend auch als Behandlungsstation 51 bezeichnet. Der erste Transportstern 10 ist auch schräg zu jeder Blasstation 51 angeordnet Unter jeder Blasstation 51 ist eine Heizeinrichtung 60 angeordnet. Darüber hinaus ist auch der zweite Transportstern 20 schräg zu der Blasmaschine 50 und auch schräg zu jeder Blasstation 51 angeordnet. Der zweite Transportstern 20 ist außerdem schräg zu der zweiten Transportschiene 40 angeordnet.

Demzufolge sind in Fig. 2 der erste und zweite Transportstern 10, 20 benachbart, vorzugsweise parallel zueinander angeordnet. Außerdem sind die erste und zweite Transportschiene 30, 40 und die Blasmaschine 50 benachbart, vorzugsweise parallel zueinander angeordnet. Der erste Transportstern 10 und der zweite Transportstern 20 sind gemeinsam um eine dritte Drehachse 70 in der durch den kleinen schwarzen Blockdrehpfeil in Fig. 2 angegebenen Drehrichtung drehbar. Hierfür ist der erste Transportstern 10 über einen ersten Träger 71 mit der dritten Drehachse 70 verbunden. Zudem ist der zweite Transportstern 20 über den zweiten Träger 72 mit der dritten Drehachse 70 verbunden.

Die erste Transportschiene 30 führt die Vorformlinge 5 demnach an einem Punkt 80, der auf einer Verlängerung der dritten Drehachse 70 liegt, dem ersten Transportstern 10 zu. Analog dazu übergibt der zweite Transportstern 20 die fertiggestellten Behälter 4 an einem Punkt 81, der auf einer Verlängerung der dritten Drehachse 70 liegt, an die zweite Transportschiene 40.

Die Heizeinrichtungen 60 in Fig. 2 können die Vorformlinge 5 jeweils auf die erforderliche Temperatur, die Umformtemperatur, erwärmen, damit die Vorformlinge 5 in der Blasstation 51 mittels Einblasen eines gasförmigen Mediums in die Form des gewünschten fertigen Behälters 4 umgeformt werden können. Bei Streckblasmaschinen werden die Behälter zudem mit einer Reckstange gereckt.

Bei der zuvor beschriebenen Behälterbehandlungsanlage 1 gewährleistet die Transporteinrichtung 7, dass die Zuführung der Vorformlinge 5 zu dem ersten Transportstern 10, also die Übergabe von der Transportschiene 30 auf den ersten Transportstern 10, und der Behälterabtransport von dem zweiten Transportstern 20, also die Übergabe von dem zweiten Transportstern 20 auf die zweite Transportschiene 40, jeweils von einem fixen Punkt 80, 81 ausgehen. Diese Punkte 80, 81 liegen jeweils auf der Achse durch den Mittelpunkt des Rings, den die Blasstationen 51 miteinander bilden. Die Achse durch den Mittelpunkt des Rings der Blasmaschine 50 ist in Fig. 1 die Drehachse 70. Dadurch kann für die Vorformlinge 5 die gleiche Transferzeit zu den einzelnen Blasstationen 51 gewährleistet werden. Wo genau die Punkte 80, 81 in der Mitte des Rings der Blasmaschine 50 liegen richtet sich auch danach, wie die Einrichtung konstruiert ist, welche die Behälter 4 zu dem ersten Transportstern 10 transportiert und welche die Behälter 4 von dem zweiten Transportstern 20 wegtransportiert.

Die Zuführung der Vorformlinge 5 zu dem ersten Transportstern 10 erfolgt somit an einem Punkt 80 der in einer anderen Ebene liegt als der Punkt 81, an welchem der zweite Transportstern 20 die Behälter 4 aus der Mitte des durch die Blasstationen 51 gebildeten Rings, der Blasmaschine 50, übernimmt. In Fig. 1 und Fig. 2 liegt der Punkt 81 in einer Ebene über der Ebene, in welcher der Punkt 80 liegt. Die Rotationsebenen des ersten und zweiten Transportsterns 10, 20 sind gegenüber der Ebene des aus den Blasstationen 51 gebildeten Rings unterschiedlich geneigt.

Fig. 3 zeigt eine erste Modifikation des ersten Ausführungsbeispiels als Modifikation der Behälterbehandlungsanlage 1 und ihrer Transporteinrichtung 7 in einer Seitenansicht. Die modifizierte Behälterbehandlungsanlage 1 ist in weiten Teilen auf die gleiche Weise aufgebaut wie die Behälterbehandlungsanlage 1 des ersten Ausführungsbeispiels. Daher sind im Folgenden nur die Unterschiede zwischen dem ersten Ausführungsbeispiel und seiner ersten Modifikation beschrieben. Im Übrigen wird auf die Beschreibung des ersten Ausführungsbeispiels verwiesen.

Im Unterschied zum ersten Ausführungsbeispiel hat die modifizierte Behälterbehandlungsanlage 1 anstelle der Heizeinrichtungen 60, die jeder Blasstation 51 einzeln zugeordnet sind, eine lineare Heizeinrichtung 65. Bei der linearen Heizeinrichtung 65 werden die Vorformlinge 5 entlang einer nicht dargestellten Heizstrecke mit nicht dargestellten Infrarotstrahlern transportiert und dadurch erwärmt. Die lineare Heizeinrichtung 65 ist in Fig. 3 nur sehr schematisch dargestellt, da die lineare Heizeinrichtung aus dem Stand der Technik sehr gut bekannt ist.

Bei der ersten Modifikation des ersten Ausführungsbeispiels werden demzufolge die von der linearen Heizeinrichtung 65 vorgewärmten Vorformlinge 5 an den ersten Transportstern 10 übergeben, welcher sie der Reihe nach den einzelnen Blasstationen 51 zuführt. Damit kann die erste Transportschiene 30 bei dieser Modifikation des ersten Ausführungsbeispiels entfallen bzw. sie ist Teil der linearen Heizeinrichtung 65.

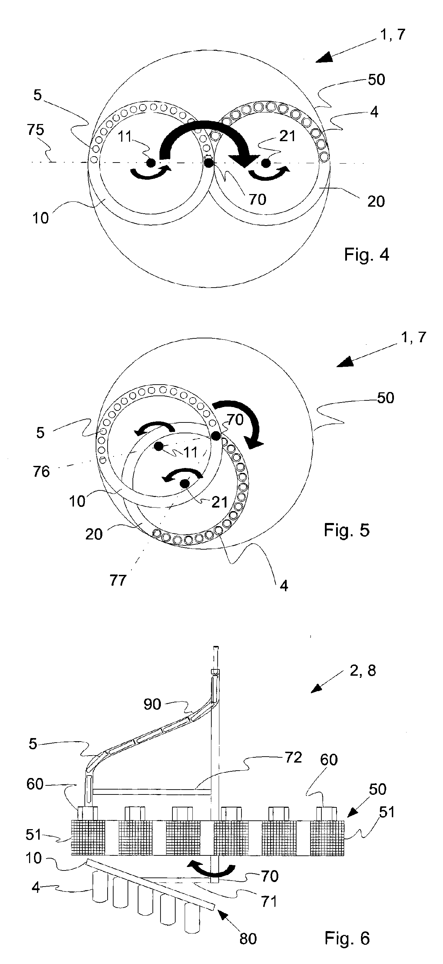

Fig. 4 zeigt eine zweite Modifikation des ersten Ausführungsbeispiels, bei welcher die Behälterbehandlungsanlage 1 und ihre Transporteinrichtung 7 in einer vereinfachten Draufsicht dargestellt sind. Die erste und zweite Transportschiene 30, 40 sind nicht dargestellt. Hier führt bzw. dreht der erste und zweite Transportstern 10, 20 jeweils genau durch die Verlängerung der dritten Drehachse 70. Zudem liegen die erste bis dritte Drehachse 11, 21, 70 auf der strichpunktierten Linie 75, einer Geraden. Das heißt, die erste und zweite Drehachse 11, 21 sind mit einem Winkel von 180° zueinander angeordnet, Darüber hinaus drehen sich der erste und zweite Transportstern 10, 20 in der gleichen Richtung um ihre jeweilige Drehachse 11, 21, wohingegen sie in einer dazu entgegengesetzten Richtung gemeinsam um die dritte Drehachse 70 gedreht werden. In dem in Fig. 4 gezeigten Fall werden ferner die Vorformlinge 5 von oben zur Blasmaschine 50 geführt, so dass auch die Heizeinrichtungen 60 hier oberhalb der Blasstationen 51 angeordnet sind. Demgegenüber werden die fertigen Behälter 4 nach unten abtransportiert.

Fig. 5 zeigt eine dritte Modifikation des ersten Ausführungsbeispiels, bei welcher die Behälterbehandlungsanlage 1 und ihre Transporteinrichtung 7 in einer weiteren vereinfachten Draufsicht dargestellt sind. Die erste und zweite Transportschiene 30, 40 sind wieder nicht dargestellt. Bei dieser Modifikation sind der erste und zweite Transportstern 10, 20 näher aneinander angeordnet und drehen sich gemeinsam um die dritte Drehachse 70. Das heißt, die erste und zweite Drehachse 11, 21 sind mit einem kleineren Winkel als 180° zueinander angeordnet, nämlich mit einem Winkel zwischen den strichpunktierten Linien 76 und 77, der in Fig. 5 etwa 50° beträgt. Dadurch liegen die erste bis dritte Drehachse 11, 21, 70 nicht mehr auf einer geraden Linie. Die erste und dritte Drehachse 11, 70 liegen jedoch hier auf der strichpunktierten Linie 76. Die zweite und dritte Drehachse 21, 70 liegen auf der strichpunktierten Linie 77. Auch hier drehen sich der erste und zweite Transportstern 10, 20 in der gleichen Richtung um ihre jeweilige Drehachse 11, 21, wohingegen sie in einer dazu entgegengesetzten Richtung gemeinsam um die dritte Drehachse 70 gedreht werden. In dem in Fig. 5 gezeigten Fall werden ferner die Vorformlinge 5 von oben zur Blasmaschine 50 geführt, so dass auch die Heizeinrichtungen 60 hier oberhalb der Blasstationen 51 angeordnet sind. Demgegenüber werden die fertigen Behälter 4 nach unten abtransportiert.

Bei der in Fig. 5 gezeigten Ausführungsvariante ist gegenüber den in Fig. 1 bis Fig. 4 gezeigten Ausführungsvarianten ein geringerer Totwinkel zwischen einer Entnahme eines fertigen Behälters 4 aus einer bestimmten Blasstation 51 (an der strichpunktierten Linie 77 bei der Blasmaschine 50) und eines Beladens dieser bestimmten Blasstation 51 (an der strichpunktierten Linie 76 bei der Blasmaschine 50) mit einem Vorformling 5 vorhanden. Daher ist die in Fig. 5 gezeigte Ausführungsvariante in Bezug auf die Minimierung des Totwinkels vorteilhafter als die in Fig. 1 bis Fig. 4 gezeigten Ausführungsvarianten.

Fig. 6 zeigt eine Behälterbehandlungsanlage 2 gemäß einem zweiten Ausführungsbeispiel, welche nur einen Transportstern 20 aufweist. Der Transportstern 20 transportiert die mit der Behandlungseinrichtung 2 behandelten Behältnisse, die fertigen Behälter 4, weg von den Blasstationen 51. Der Transportstern 20 ist um seine eigene Achse, die zweite Drehachse 21, und um die dritte Drehachse 70 in der durch den kleinen schwarzen Blockdrehpfeil in Fig. 4 angegebenen Drehrichtung drehbar. Anstelle des ersten Transportsterns 10 ist bei diesem Ausführungsbeispiel ein rohrförmiges Element 90, beispielsweise ein biegsames Rohr, ein Schlauch, etc., insbesondere aus Kunststoff, etc., vorgesehen, welcher die Vorformlinge 5 den Blasstationen 51 zuführt. Das rohrförmige Element 90 ist zusammen mit dem Transportstern 20 mittels des Trägers 72 an der dritten Drehachse 70 befestigt und in der durch den kleinen schwarzen Blockdrehpfeil in Fig. 6 angegebenen Drehrichtung drehbar.

Bei der in Fig. 6 gezeigten Konstruktion werden die Vorformlinge 5 von oben, bevorzugt nach ihrem nicht dargestellten Vereinzeln und Ausrichten, in das rohrförmige Element 90 eingeschleust und gelangen durch dieses zur Heizeinrichtung 60, die hier oberhalb der Blasstationen 51 angeordnet ist. Hierbei können die Vorformlinge 5 durch ihre eigene Gewichtskraft und/oder mit Druckluft angetrieben werden. Zwischen dem rohrförmigen Element 90 und der Heizeinrichtung 60 kann auch noch eine nicht dargestellte Transportschiene vorhanden sein. In Fig. 6 ist eine Variante gezeigt, bei der sich die Vorformlinge 5 im rohrförmigen Element 90 aufeinander abstützen. Bei dieser Variante kann ein Stau durch Verhaken der Vorformlinge 5 im rohrförmigen Element 90 entstehen. Bei einer nicht dargestellten weiteren Variante, bei welcher die Vorformlinge 5 einzeln durch das rohrförmige Element 90 geschossen werden, kann im rohrförmigen Element 90 kein Stau entstehen.

Das rohrförmige Element 90 führt die Vorformlinge 5 demnach von einem Punkt 80, der auf einer Verlängerung der dritten Drehachse 70 liegt, zu den einzelnen Blasstationen 51. Der Transportstern 20 übergibt die fertiggestellten Behälter 4 an einem Punkt 81, der auf einer Verlängerung der dritten Drehachse 70 liegt, an die Transportschiene 40.

Allgemeiner ausgedrückt kann also bei diesem Ausführungsbeispiel bei der Behälterbehandlungsanlage 2 anstelle des ersten und zweiten Transportsterns 10, 20 auch nur ein Transportstern vorhanden sein, welcher die noch unfertigen bzw. noch nicht mit der Behandlungseinrichtung 2 behandelten Behältnisse, die Vorformlinge 5, zu den Blasstationen 51 transportiert oder welcher die mit der Behandlungseinrichtung 2 behandelten Behältnisse, die fertigen Behälter 4, von den Blasstationen 51 wegtransportiert. Der jeweils andere Vorgang, Transport hin zu den Blasstationen 51 oder Transport weg von den Blasstationen 51, kann auf eine andere Weise erfolgen.

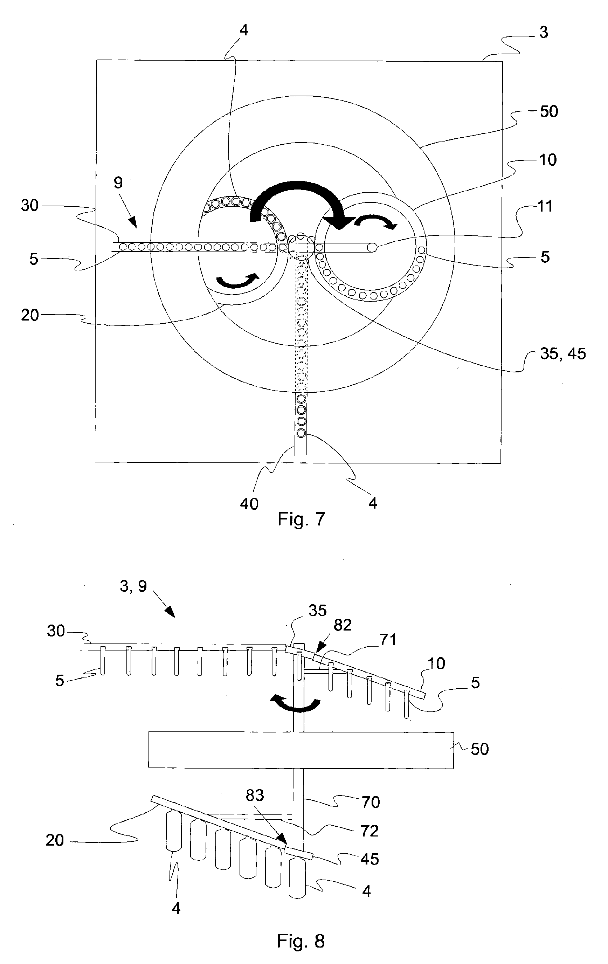

Fig. 7 und Fig. 8 zeigen eine Behälterbehandlungsanlage 3 mit ihrer Transporteinrichtung 9 gemäß dem dritten Ausführungsbeispiel. Die Behälterbehandlungsanlage 3 des dritten Ausführungsbeispiels hat im Wesentlichen dieselben Teile, wie die Behälterbehandlungsanlage 1 des ersten Ausführungsbeispiels. Daher sind im Folgenden nur die Unterschiede zwischen dem ersten und dritten Ausführungsbeispiel beschrieben. Im Übrigen wird auf die Beschreibung des ersten und zweiten Ausführungsbeispiels verwiesen. In Fig. 7 und Fig. 8 ist die Heizeinrichtung 60 oder 65 der Einfachheit halber nicht dargestellt.

Im Unterschied zum ersten Ausführungsbeispiel erfolgt bei der Behälterbehandlungsanlage 3 des dritten Ausführungsbeispiels die Zuführung der Vorformlinge 5 in einer Ebene über dem Abtransport der Behälter 4, wobei die erste und zweite Transportschiene 30, 40 auch anders zueinander angeordnet sind als bei dem ersten Ausführungsbeispiel. Zudem dreht sich der erste Transportstern 10 in einer anderen Drehrichtung als der zweite Transportstern 20, wie in Fig. 7 mittels der kleinen schwarzen Blockdrehpfeile gezeigt. Das heißt, der erste und zweite Transportstern 10, 20 drehen sich bei diesem Ausführungsbeispiel entgegengesetzt zueinander. Darüber hinaus sind bei der Behälterbehandlungsanlage 3 des dritten Ausführungsbeispiels der erste und zweite Transportstern 10, 20 nicht mehr derart angeordnet, dass sie ihren Übergabepunkt in dem Zentrum der Blasmaschine 50 haben. Stattdessen ist zwischen dem ersten Transportstern 10 und der ersten Transportschiene 30 ein dritter Transportstern 35 angeordnet. Dies ist auch aus Fig. 8 besser ersichtlich. Darüber hinaus ist zwischen dem zweiten Transportstern 20 und der zweiten Transportschiene 40 ein vierter Transportstern 45 angeordnet. Auch dieser vierte Transportstern 45 ist in Fig. 8 genauer dargestellt.

Wie in Fig. 7 dargestellt, bilden die erste und zweite Transportschiene 30, 40 einen rechten Winkel zueinander. Demzufolge werden die Vorformlinge 5 mittels der ersten Transportschiene 30 von links in Fig. 7 und Fig. 8 zum dritten Transportstern 35 geführt und an diesen an dem Punkt 82 (Fig. 8) übergeben. Nach der Übergabe der Vorformlinge 5 mittels des dritten Transportsterns 35 an den ersten Transportstern 10 werden die Vorformlinge 5 von oben in die Blasmaschine 50 eingeführt. Nach Fertigstellung der Behälter 4 in der Blasmaschine 50 werden die Behälter 4 von dem zweiten Transportstern 20 übernommen, an den vierten Transportstern 45 an dem Punkt 83 (Fig. 8) übergeben und dann von dem vierten Transportstern 45 an die vierte Transportschiene 40 übergeben, welche die fertigen Behälter 4 in Fig. 7 nach unten und in Fig. 8 aus der Zeichnungsebene von Fig. 8 nach vorne führt.

Die Ausführungsform gemäß dem dritten Ausführungsbeispiel ist wegen des dritten und vierten Transportsterns 35, 45 mechanisch aufwendiger als die Ausführungsformen des ersten oder zweiten Ausführungsbeispiels oder den Modifikationen des ersten Ausführungsbeispiels. Für die mechanisch einfachste Lösung wird daher eine der Ausführungsformen gemäß dem ersten oder zweiten Ausführungsbeispiel oder den Modifikationen des ersten Ausführungsbeispiels bevorzugt.

Alle zuvor beschriebenen Ausgestaltungen der Behälterbehandlungsanlage 1, 2, 3, der Transporteinrichtung 7, 8 ,9 und des zuvor beschriebenen Transportverfahrens können einzeln oder in allen möglichen Kombinationen Verwendung finden. Die Merkmale des ersten bis dritten Ausführungsbeispiels sind beliebig miteinander kombinierbar. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Behälterbehandlungsanlage 1, 2, 3 des ersten bis dritten Ausführungsbeispiels kann auch zur Behandlung von Glasflaschen Verwendung finden. Zudem kann die Behälterbehandlungsanlage 1, 2, 3 eine Blasmaschine 50, eine Reinigungsmaschine, eine Füllmaschine, eine Etikettiermaschine, usw. direkt in einer Reihe hintereinander angeordnet haben, so dass die Behälter 4 jeweils von der vorhergehenden Maschine zur folgenden Maschine mittels einer der beschriebenen Transporteinrichtungen 7, 8, 9 transportiert werden können.

Die Heizeinrichtungen 60 in Fig. 2 können z.B. Mikrowellenöfen sein. Zudem kann auch die lineare Heizeinrichtung 65 in Fig. 3 als Mikrowellenofen ausgeführt sein. Grundsätzlich sind verschiedene Heizeinrichtungen, die beispielsweise mittels Infrarot oder Mikrowellen heizen, denkbar. Die Heizeinrichtungen 60, 65 können beliebig mit den beschriebenen Transporteinrichtungen 7, 8, 9 kombiniert werden.

Der erste und zweite Transportstern 10, 20 können als kreisförmige Linearführungen ausgeführt sein, wie in den Figuren gezeigt. Der erste und zweite Transportstern 10, 20 können jedoch auch als zweiarmiger Innenstern ausgeführt sein.

Auch die erste und/oder zweite Transportschiene 30, 40 können/kann als Transportstern ausgeführt sein.

Es ist möglich, dass der erste Transportstern 10 eine andere Größe hat, als der zweite Transportstern 20. In einem solchen Fall muss sich der kleinere Transportstern schneller drehen als der größere Transportstern.

Bei dem dritten Ausführungsbeispiel können der erste und zweite Transportstern 10, 20 im Verhältnis zu dem dritten und vierten Transportstern 35, 45 auch kleiner sein als in Fig. 7 und Fig. 8 dargestellt. Dementsprechend ist in diesem Fall der dritte und vierte Transportstern 35, 45 größer zu gestalten. Der dritte und vierte Transportstern 35, 45 ist hierbei jeweils zentral in dem Ring der Blasmaschine 50 anzuordnen, wie in Fig. 7 und Fig. 8 gezeigt, so dass eine Verbindung zwischen dem ersten Transportstern 10 und der ersten Transportschiene 30 über den dritten Transportstern 35 und eine Verbindung zwischen dem zweiten Transportstern 20 und der zweiten Transportschiene 20 über den vierten Transportstern 45 besteht, wie in Fig. 7 und Fig. 8 gezeigt. Auch auf diese Weise kann die gleiche Transferzeit der Vorformlinge 5 zu der Blasmaschine 50 realisiert werden.

### Bezugszeichenliste

- 1, 2, 3: Behälterbehandlungsanlage
- 4: Behälter/Behältnis
- 5: Vorformling/Behältnis
- 7, 8, 9: Transporteinrichtung
- 10: Erster Transportstern
- 11: Erste Drehachse
- 15: Kreisbahn
- 20: Zweiter Transportstern
- 21: Zweite Drehachse
- 30: Erste Transportschiene
- 35: Dritter Transportstern
- 40: Zweite Transportschiene
- 45: Vierter Transportstern
- 50: Blasmaschine/Blasrad
- 51: Blasstationen/Behandlungsstation
- 60, 65: Heizeinrichtung
- 70: Dritte Drehachse
- 71: Erster Träger
- 72: Zweiter Träger
- 75, 76, 77: Strichpunktierte Linie
- 80, 81, 82, 83: Übergabepunkt
- 90: Rohrförmiges Element

## Patentansprüche

1. Transporteinrichtung (7; 8; 9) für eine Behälterbehandlungsanlage (1; 2; 3), mit
wenigstens einem Transportstern (10; 20) zum Transport von Behältnissen (5, 4) zu einer oder weg von einer Behandlungsstation (51) der Behälterbehandlungsanlage (1, 2, 3),
wobei ein Transportstern ein erster Transportstern (10) zum Transport von Behältnissen (5) zu einer Behandlungsstation (51) der Behälterbehandlungsanlage (1, 2, 3) ist und ein Transportstern ein zweiter Transportstern (20) zum Transport der Behältnisse (4) weg von der Behandlungsstation (51) der Behälterbehandlungsanlage (1; 2; 3) ist,
wobei der erste Transportstern (10) und/oder der zweite Transportstern (20) schräg zu der Behandlungsstation (51) angeordnet sind/ist.

2. Transporteinrichtung (7; 8; 9) nach Anspruch 1, wobei der erste und zweite Transportstern (10, 20) und die Behandlungsstation (51) relativ zueinander bewegbar sind.

3. Transporteinrichtung (7; 8; 9) nach Anspruch 1 oder 2, wobei der erste Transportstern (10) um eine erste Drehachse (11) drehbar ist und der zweite Transportstern (20) um eine zweite Drehachse (21) drehbar ist, und wobei der erste und zweite Transportstern (20) zusammen um eine dritte Drehachse (70) drehbar sind.

4. Transporteinrichtung (7; 8; 9) nach Anspruch 3, wobei die erste und zweite Drehachse (11, 21) jeweils schräg zur dritten Drehachse (70) angeordnet sind, und/oder wobei die erste Drehachse (21) parallel zur zweiten Drehachse (21) angeordnet ist.

5. Transporteinrichtung (7; 8; 9) nach einem der Ansprüche 1 bis 4, wobei der erste Transportstern (10) derart benachbart zu dem zweiten Transportstern (20) angeordnet ist, dass die Behandlungsstation (51) außen an einem Ring (50) anordenbar ist, innerhalb welchem der erste und zweite Transportstern (10, 20) angeordnet sind.

6. Transporteinrichtung (7; 8; 9) nach Anspruch 5, wobei der erste Transportstern (10) derart angeordnet ist, dass er die Behälter (5) zum Transport an die Behandlungsstation (51) an einem Punkt (80) in der Mitte des Rings (50) übernehmen kann, und der zweite Transportstern (20) derart angeordnet ist, dass er die Behälter (4) nach seinem Transport an einem Punkt (81) in der Mitte des Rings (50) abgeben kann.

7. Transporteinrichtung (8) nach Anspruch 1, zudem mit einem rohrförmigen Element (90) zur Zuführung von Vorformlingen (5) zu einer Behandlungsstation (51) der Behälterbehandlungsanlage (2), wobei ein schräg zu der Behandlungsstation (51) angeordneter Transportstern (20) des mindestens einen Transportsterns (10; 20) zum Transport der Behältnisse (4) weg von der Behandlungsstation (51) der Behälterbehandlungsanlage (23) dient.

8. Transporteinrichtung (7; 8; 9) nach einem der vorangehenden Ansprüche, wobei die Behälterbehandlungsanlage (1; 2; 3) eine Blasmaschine (50) oder eine Reinigungsmaschine oder eine Füllmaschine oder eine Etikettiermaschine ist.

9. Blasmaschine (50) zum Herstellen von Behältern (4), zur Aufnahme eines Produkts, aus Vorformlingen (5), mit
einer Vielzahl von Blasstationen (51), die zusammen einen Ring (50) bilden, zum Formen eines Behälters (4) aus einem Vorformling (5), und
einer Transporteinrichtung (7; 8; 9) nach einem der Ansprüche 1 bis 6 zum Transport von jeweils einem Vorformling (5) zu einer der Vielzahl von Blasstationen (51) und zum Transport von jeweils einem Behälter (4) weg von einer der Vielzahl von Blasstationen (51).

10. Blasmaschine (50) nach Anspruch 9, wobei die Vielzahl von Blasstationen (51) gegenüber dem ersten und zweiten Transportstern (10, 20) der Transporteinrichtung (7; 8; 9) feststehend angeordnet ist.

11. Transportverfahren für eine Behälterbehandlungsanlage (1; 2; 3), mit den Schritten
Transportieren von Behältnissen (5, 4) zu einer oder weg von einer Behandlungsstation (51) der Behälterbehandlungsanlage (1; 2; 3) mit wenigstens einem Transportstern (10; 20), wobei ein Transportstern (10; 20) ein erster Transportstern (10) zum Transport von Behältnissen (5) zu einer Behandlungsstation (51) der Behälterbehandlungsanlage (1, 2, 3) ist, und
Transportieren von Behältnissen (5, 4) weg von der Behandlungsstation (51) der Behälterbehandlungsanlage (1; 2; 3) mit einem zweiten Transportstern (20),
wobei der erste Transportstern (10) und/oder der zweite Transportstern (20) schräg zu der Behandlungsstation (51) angeordnet sind/ist.

## Claims

1. A transport device (7; 8; 9) for a container treatment plant (1; 2; 3), the transport device comprising
at least one transport star (10; 20) for transporting receptacles (5, 4) to or away from a treatment station (51) of the container treatment plant (1, 2, 3),
wherein one transport star is a first transport star (10) for transporting receptacles (5) to a treatment station (51) of the container treatment plant (1, 2, 3), and one transport star is a second transport star (20) for transporting the receptacles (4) away from the treatment station (51) of the container treatment plant (1; 2; 3),
wherein the first transport star (10) and/or the second transport star (20) are/is positioned obliquely to the treatment station (51).

2. The transport device (7; 8; 9) according to claim 1, wherein the first and second transport stars (10, 20) and the treatment station (51) are movable relative to each other.

3. The transport device (7; 8; 9) according to claim 1 or 2, wherein the first transport star (10) is rotatable around a first rotation axis (11) and the second transport star (20) is rotatable around a second rotation axis (21), and wherein the first and second transport stars (10; 20) are rotatable together around a third rotation axis (70).

4. The transport device (7; 8; 9) according to claim 3, wherein the first and second rotation axes (11, 21) are each positioned obliquely to the third rotation axis (70), and/or the first rotation axis (11) is positioned in parallel to the second rotation axis (21).

5. The transport device (7; 8; 9) according one of the claims 1 to 4, wherein the first transport star (10) is positioned adjacent to the second transport star (20), such that the treatment station (51) is positionable at the outside of a ring (50) in which the first and second transport stars (10, 20) are positioned.

6. The transport device (7; 8; 9) according to claim 5, wherein the first transport star (10) is positioned such that it can take over the receptacles (5) at a spot (81) in the center of the ring (50) to transport them to the treatment station (51), and the second transport star (20) is positioned such that it can hand over the receptacles (4) at a spot (81) in the center of the ring (50) after having transported them.

7. The transport device (7; 8; 9) according to claim 1, further comprising a tubular element (90) for supplying a treatment station (51) of the container treatment plant (2) with parisons (5), wherein one transport star of the at least one transport star (10; 20), which is positioned obliquely to the treatment station (51), serves for transporting the receptacles (4) away from the treatment station (51) of the container treatment plant (2; 3).

8. The transport device (7; 8; 9) according to one of the preceding claims, wherein the container treatment plant (1; 2; 3) is a machine selected from the group consisting of a blow molding machine (50), a cleaning machine, a filling machine, and a labeling machine.

9. A blow molding machine (50), for producing containers (4), for accommodating a product, from parisons (5), the blow molding machine (50) comprising
a plurality of blowing stations (51) forming together a ring (50) and configured for shaping a container (4) from a parison (5), and
a transport device (7; 8; 9) according to one of the claims 1 to 6 for transporting one parison (5) each to one of the plurality of blowing stations (51) and for transporting one container (4) each away from one of the plurality of blowing stations (51).

10. The blow molding machine (50) according to claim 9, wherein the plurality of blowing stations (51) are positioned stationary compared to the first and second transport stars (10, 20) of the transport device (7; 8; 9).

11. A transport method for a container treatment plant (1; 2; 3), the transport method comprising the steps of
transporting receptacles (5, 4) to or away from a treatment station (51) of the container treatment plant (1; 2; 3) by at least one transport star (10; 20), wherein one transport star is a first transport star (10) for transporting receptacles (5) to a treatment station (51) of the container treatment plant (1, 2, 3), and
transporting receptacles (5, 4) away from the treatment station (51) of the container treatment plant (1; 2; 3) with a second transport star (20),
wherein the first transport star (10) and/or the second transport star (20) are/is positioned obliquely to the treatment station (51).

## Revendications

1. Dispositif de transport (7 ; 8 ; 9) pour une installation de traitement de récipients (1 ; 2 ; 3), le dispositif de transport comprenant :
au moins un carrousel de transport (10 ; 20) pour transporter des récipients (5 ; 4) vers une station de traitement (51) de l'installation de traitement de récipients (1 ; 2 ; 3) ou à l'écart de celle-ci,
dans lequel un carrousel de transport est un premier carrousel de transport (10) pour transporter des récipients (5) vers une station de traitement (51) de l'installation de traitement de récipients (1 ; 2 ; 3), et un carrousel de transport est un deuxième carrousel de transport (20) pour transporter les récipients (4) à l'écart de la station de traitement (51) de l'installation de traitement de récipients (1 ; 2 ; 3),
dans lequel le premier carrousel de transport (10) et/ou le deuxième carrousel de transport (20) est/sont agencés obliquement par rapport à la station de traitement (51).

2. Dispositif de transport (7 ; 8 ; 9) selon la revendication 1, dans lequel les premier et deuxième carrousels de transport (10 ; 20) et la station de traitement (51) peuvent être déplacés l'un par rapport à l'autre.

3. Dispositif de transport (7 ; 8 ; 9) selon la revendication 1 ou 2, dans lequel le premier carrousel de transport (10) peut tourner autour d'un premier axe de rotation (11) et le deuxième carrousel de transport (20) peut tourner autour d'un deuxième axe de rotation (21), et dans lequel les premier et deuxième carrousels de transport (10 ; 20) peuvent tourner ensemble autour d'un troisième axe de rotation (70).

4. Dispositif de transport (7 ; 8 ; 9) selon la revendication 3, dans lequel chacun des premier et deuxième axes de rotation (11, 21) est agencé obliquement par rapport au troisième axe de rotation (70), et/ou le premier axe de rotation (11) est agencé parallèlement au deuxième axe de rotation (21).

5. Dispositif de transport (7 ; 8 ; 9) selon l'une des revendications 1 à 4, dans lequel le premier carrousel de transport (10) est agencé adjacent au deuxième carrousel de transport (20), de sorte que la station de traitement (51) puisse être agencée à l'extérieur d'un anneau (50) dans lequel les premier et deuxième carrousels de transport (10, 20) sont agencés.

6. Dispositif de transport (7 ; 8 ; 9) selon la revendication 5, dans lequel le premier carrousel de transport (10) est agencé de manière à pouvoir prendre les récipients (5) à un emplacement (80) au centre de l'anneau (50) pour les transporter vers la station de traitement (51), et le deuxième carrousel de transport (20) est agencé de manière à pouvoir déposer les récipients (4) à un emplacement (81) au centre de l'anneau (50) après les avoir transportés.

7. Dispositif de transport (7 ; 8 ; 9) selon la revendication 1, comprenant en outre un élément tubulaire (90) pour fournir des paraisons (5) à une station de traitement (51) de l'installation de traitement de récipients (2), dans lequel un carrousel de transport de l'au moins un carrousel de transport (10 ; 20), qui est agencé obliquement par rapport à la station de traitement (51), sert à transporter les récipients (4) à l'écart de la station de traitement (51) de l'installation de traitement de récipients (2 ; 3).

8. Dispositif de transport (7 ; 8 ; 9) selon l'une des revendications précédentes, dans lequel l'installation de traitement de récipients (1 ; 2 ; 3) est une machine sélectionnée dans le groupe se composant d'une machine de moulage par soufflage (50), d'une machine de nettoyage, d'une machine de remplissage et d'une machine d'étiquetage.

9. Machine de moulage par soufflage (50), pour produire des récipients (4), destinés à recevoir un produit, à partir de paraisons (5), la machine de moulage par soufflage (50) comprenant :
une pluralité de stations de soufflage (51) formant ensemble un anneau (50) et configurées pour façonner un récipient (4) à partir d'une paraison (5), et
un dispositif de transport (7 ; 8 ; 9) selon l'une des revendications 1 à 6 pour transporter une paraison (5) vers l'une de la pluralité de stations de soufflage (51) et pour transporter un récipient (4) à l'écart de l'une de la pluralité de stations de soufflage (51).

10. Machine de moulage par soufflage (50) selon la revendication 9, dans laquelle la pluralité de stations de soufflage (51) sont agencées immobiles par rapport aux premier et deuxième carrousels de transport (10 ; 20) du dispositif de transport (7 ; 8 ; 9).

11. Procédé de transport pour une installation de traitement de récipients (1 ; 2 ; 3), le procédé de transport comprenant les étapes de :
le transport de récipients (5 ; 4) vers une station de traitement (51) de l'installation de traitement de récipients (1 ; 2 ; 3) ou à l'écart de celle-ci par au moins un carrousel de transport (10 ; 20), dans lequel un carrousel de transport est un premier carrousel de transport (10) pour transporter des récipients (5) vers une station de traitement (51) de l'installation de traitement de récipients (1 ; 2 ; 3), et
le transport de récipients (5 ; 4) à l'écart de la station de traitement (51) de l'installation de traitement de récipients (1 ; 2 ; 3) avec un deuxième carrousel de transport (20),
dans lequel le premier carrousel de transport (10) et/ou le deuxième carrousel de transport (20) est/sont agencés obliquement par rapport à la station de traitement (51).
